(19) **Europäisches Patentamt European Patent Office Office européen des brevets**

(11) **EP 4 768 902 A1**

(12) # EUROPEAN PATENT APPLICATION
published in accordance with Art. 153(4) EPC

(43) Date of publication:
01.07.2026 Bulletin 2026/27

(51) International Patent Classification (IPC):
$G01N\ 27/30^{(2006.01)}$   $G01N\ 27/333^{(2006.01)}$
$G01N\ 27/416^{(2006.01)}$

(21) Application number: 25846923.8

(22) Date of filing: 02.07.2025

(86) International application number:
PCT/CN2025/106652

(87) International publication number:
WO 2026/026477 (05.02.2026 Gazette 2026/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.07.2024 CN 202411056888

(71) Applicant: Shenzhen Angel Drinking Water
Industrial Group Corporation
Shenzhen, Guangdong 518107 (CN)

(72) Inventors:
• ZHAO, Kai
  Shenzhen, Guangdong 518107 (CN)
• LEI, Jing
  Shenzhen, Guangdong 518107 (CN)
• WANG, Chengcheng
  Shenzhen, Guangdong 518107 (CN)
• LIU, Mengqi
  Shenzhen, Guangdong 518107 (CN)

(74) Representative: Becker Kurig & Partner
Patentanwälte mbB
Bavariastraße 7
80336 München (DE)

(54) **ELECTROCHEMICAL SENSOR AND METHOD THEREOF FOR DETECTING METAL IONS**

(57) The present application provides an electrochemical sensor and a method for testing metal ions by using the same, and relates to the technical field of water quality testing. The electrochemical sensor provided by the present application includes: a sensor body; sensing electrodes arranged on a surface of the sensor body, the sensing electrodes including a testing electrode, a reference electrode and a hydrogen ion indication electrode; an ion permselective membrane covering a surface of at least one of the testing electrode and the hydrogen ion indication electrode. According to the present application, the ion permselective membrane on the sensor body filters corresponding target hydrogen or metal ions in a solution. The hydrogen ion indication electrode measures a pH value of the solution and calibrate the concentration of tested ions based on the pH value, to reduce the interference of the pH value of the solution on measurement. The testing electrode tests the concentration of metal ions and calibrates the concentration of tested ions, to reduce the interference of interference ions on the tested ions, thereby enhancing the testing accuracy and stability.

Fig. 1

EP 4 768 902 A1

**Description**

Technical Field

The present application relates to the technical field of water quality testing, and in particular to an electrochemical sensor and a method for testing metal ions by using the same.

Backgroud

Calcium, magnesium and other metal ions in water are critical indicators for water quality testing. The concentrations of these ions directly affect water hardness, significantly influencing numerous industries such as food processing, household use and agricultural irrigation. Traditional methods for testing calcium and magnesium ions mainly depend on chemical titration, atomic absorption spectroscopy and inductively coupled plasma mass spectrometry. These methods typically require complex preprocessing steps, expensive instruments and equipment and specialized operators, leading to high costs and difficulties in achieving rapid testing on site.

In recent years, electrochemical sensors have become a popular technical choice in fields such as calcium and magnesium ion testing in water and blood gas analysis, due to their advantages such as high sensitivity, low cost, ease of operation and portability. However, existing electrochemical sensors exhibit poor stability and reproducibility, and are susceptible to interferences and the like from environment factors. Furthermore, due to the complex composition of water, the sensors operating in constant-concentration environments for a long time may output time-varying results and cannot maintain outputs unchanged, resulting in a drift pHenomenon and thus inaccurate testing results. In particular, divalent metal cations such as calcium and magnesium ions are more prone to causing inferences than monovalent ions such as sodium and potassium ions. Therefore, how to enhance the accuracy, stability and interference resistance of electrochemical sensors has become a critical issue that urgently needs to be addressed.

Summary

In view of the above, the present application provides an electrochemical sensor and a method for testing metal ions by using the same, which can enhance the accuracy, stability and interference resistance for ion testing.

The present application provides an electrochemical sensor, including:

a sensor body;
sensing electrodes, being arranged on a surface of the sensor body, the sensing electrodes including:

a testing electrode for testing a concentration of metal ions in a solution,
a reference electrode for providing a reference for the testing electrode, and
a hydrogen ion indication electrode for measuring a pH value of the solution; and
an ion permselective membrane covering a surface of at least one of the testing electrode and the hydrogen ion indication electrode.

Optionally, the testing electrode, the reference electrode and the hydrogen ion indication electrode each include:

a transmission line section arranged on a surface of the sensor body;
an electrode section arranged on an end of the transmission line section and configured for acquiring data; and
a contact section arranged on another end of the transmission line section and configured for connecting a measuring device.

Optionally, the ion permselective membrane includes:

a membrane skeleton;
an ion carrier having a mass fraction range of0.5% to 8% of the ion permselective membrane;
a surfactant having a mass fraction range of0 to 4% o of the ion permselective membrane; and
a plasticizer having a mass fraction range of1% to 10% of the ion permselective membrane.

Optionally, the ion permselective membrane covering the hydrogen ion indication electrode further includes:
a metal chelator having a mass fraction range of0.1% to 5% of the ion permselective membrane, the metal chelator including at least one of ethylenediaminetetraacetic acid, diethylenetriaminepentaacetic acid and 1,10-phenanthroline.

Optionally, the electrochemical sensor further includes:

a gel protecting membrane arranged on surfaces of the sensing electrodes.

Optionally, the electrochemical sensor further includes:

an insulation layer arranged on a surface of the transmission line sections and configured for reducing an external electrical interference on the transmission line section.

Optionally, the sensing electrodes are screen-printed electrodes.

Optionally, the reference electrode serves as a potential reference point, the pH value of the solution is measured via the hydrogen ion indication electrode, and a concentration of tested ions among the metal ions is calibrated, to reduce an interference of a degree of acidity or alkalinity of the solution to measurement.

Optionally, the testing electrode is configured to test the concentration of the metal ions; and when at least two types of the metal ions exist in the solution, a corresponding number of the testing electrodes are arranged, respectively, and the concentration of the tested ions is calibrated based on concentrations and potential differences of interference ions and the tested ions among the metal ions as measured by the at least two types of the testing electrodes, to reduce an interference caused by the interference ions to the tested ions.

Optionally, the sensor is an electrochemical sensor of a four-channel design, the reference electrode is a silver chloride reference electrode, the testing electrode includes a calcium ion electrode and a magnesium ion electrode, and both of the calcium ion electrode and the magnesium ion electrode are covered with the ion permselective membrane.

A method for testing metal ions by using the electrochemical sensor described above includes:

obtaining measurement curves corresponding to metal ions and hydrogen ions existing in a solution by placing the electrochemical sensor in the solution and measuring a potential difference between the testing electrode and the reference electrode and a potential difference between the hydrogen ion indication electrode and the reference electrode;

determining concentrations of metal and hydrogen ions to be tested in the solution by aligning individual measured signal values measured by the electrochemical sensor with numerical values on a standard curve and performing proportional substitution conversion to obtain a corresponding ion concentration to compare the obtained measurement curves of the metal ions and hydrogen ions with the standard curve; and

calibrating a concentration of calibrated ions among the metal ions.

Optionally, the method for testing metal ions by using the electrochemical sensor described above further includes:

obtaining the standard curve by placing the electrochemical sensor in a set of ionic solutions with calibrated concentrations for measurement to yield responses of the electrochemical sensor to different concentration gradients of different metal ions.

Optionally, calibrating the concentration of the calibrated ions among the metal ions includes:

calibrating, based on the determined concentration of the metal ions in the solution and an influence coefficient of the concentration of the hydrogen ions on the calibrated ions, a concentration value of the calibrated ions by means of the following formula:

$$C_{calibrated} = (1 - A1 \times C_{H+}) \times C_{pre\text{-}calibration},$$

wherein $C_{calibrated}$ indicates a concentration value of the calibrated ions after calibration, $C_{H+}$ indicates the concentration of the hydrogen ions, A1 indicates an influence coefficient of the concentration $C_{H+}$ of the hydrogen ions on an electrode-measured value of the calibrated ions, and $C_{pre\text{-}calibration}$ indicates a concentration value of the calibrated ions before calibration.

Optionally, calibrating the concentration of the calibrated ions among the metal ions further includes:

further calibrating, when two or more types of metal ions exist in the solution, the calibrated ions among the metal ions; wherein during the further calibrating, the concentration value of the calibrated ions is further calibrated based on an influence coefficient of interference ions among the metal ions on an electrode-measured value of the calibrated ions by means of the following calculation formula:

$$C'_{calibrated} = (1 - A_{interference}) \times C_{calibrated},$$

wherein $C'_{calibrated}$ indicates a concentration value of the calibrated ions after the further calibrating, and $A_{interference}$ indicates the influence coefficient of the interference ions on the electrode-measured value of the calibrated ions.

According to the electrochemical sensor and the method for testing metal ions by using the same as provided by the present invention, corresponding target hydrogen or metal ions in a solution are filtered by means of the ion permselective membrane on the sensor body, and then accumulated on the surface of the hydrogen ion indication electrode or the testing electrode among the sensing electrodes to create a potential difference relative to the reference electrode, thereby determining the concentration of the hydrogen or metal ions. The reference electrode serves as a potential reference point, and the hydrogen ion indication electrode measures the pH value of the solution and calibrate the concentration of the tested ions based on the pH value, to reduce the interference easily caused by the degree of acidity or alkalinity of the solution to the measurement. The testing electrode tests the concentration of metal ions; and when two or more types of metal ions exist in the solution, a corresponding number of testing electrodes is arranged, respectively, and the concentration of the tested ions is calibrated based on the concentration of interference ions among the metal ions and the potential difference as measured by the plurality of testing electrodes, to reduce the interference caused by the interference ions to the tested ions, thereby enhancing the testing accuracy and stability.

Brief Description of the Drawings

To describe the technical solutions in the embodiments of the present application more clearly, the following briefly introduces the accompanying drawings required for describing the embodiments. Obviously, the accompanying drawings in the following description show only some embodiments of the present application, and a person of ordinary skill in the art may still derive other drawings from these accompanying drawings without going beyond the scope claimed by the present application.

Fig. 1 shows a schematic structural diagram of an electrochemical sensor according to the present application;
Fig. 2 shows a top view of the electrochemical sensor according to the present application;
Fig. 3 shows a schematic diagram of an exploded structure of a electrochemical sensor according to the present application;
Fig. 4 shows a schematic flowchart of testing metal ions by the electrochemical sensor according to the present application;
Fig. 5 shows a schematic flowchart of calibrating the concentration of calibrated ions among the metal ions; and
Fig. 6 shows a comparison diagram of calibration curves before and after calibration when metal ions are tested using a electrochemical sensor according to the present application.

Reference signs:

1, sensor body; 2, sensing electrode; 21, testing electrode; 22, reference electrode; 23, hydrogen ion indication electrode; 201, transmission line section; 202, electrode section; 203, contact section; 3, ion permselective membrane; 4, gel protecting membrane; 5, insulation layer.

Detailed Description of Embodiments

The technical solutions in the embodiments of the present application will be described clearly and completely below in conjunction with the accompanying drawings in the embodiments of the present application. Obviously, the embodiments described are merely some instead of all of the embodiments of the present application. Based on the embodiments in the present invention, every other embodiment achieved by those skilled in the art without making creative efforts shall fall within the protection scope of the present application.

In the description of the present invention, it should be understood that the terms "center", "longitudinal", "transverse", "length", "width", "thickness", "up", "down", "front", "back", "left", "right", "vertical", "horizontal", "top", "bottom", "inside", "outside", "clockwise", "anticlockwise" or the like indicate a direction or position relationship based on the direction or position relationship shown in the accompanying drawings for the convenience of describing the present invention and simplifying the description, instead of indicating or implying that the identified device or unit must have a specific direction, or must be constructed and operated in a specific direction. Therefore, they should not be construed as limitations on the present invention. In addition, the terms "first", "second" and the like are for descriptive purposes only and shall not be construed as indicating or suggesting relative importance or implying the clear designation of the number of technical features as indicated. As such, a feature defined by "first" or "second" may expressly or implicitly include the inclusion of one or more features. In the description of the present application, the meaning of "a plurality of" indicates two or more, unless otherwise explicitly specified.

In the description of the present application, it should be noted that, unless otherwise expressly specified and defined, the terms "installation", "attachment" and "connection" should be understood in a broad sense. For example, said connection may indicate a fixed connection, or a detachable connection, or an integral connection; or said connection may indicate a mechanical connection, or an electric connection or mutual communication; and said attachment may indicate a direct attachment or an indirect attachment via an intermediate medium, or internal communication or interaction between two elements. For those of ordinary skill in the art, the specific meanings of the above terms in the present application can be understood according to a specific situation.

In the present application, unless otherwise explicitly specified and defined, a first feature being "above" or "below" a second feature may encompass the first and second features being in direct contact, or the first and second features being not in direct contact but contacting via a further feature therebetween. Moreover, the first feature being "above", "over" and "on top of" the second feature encompasses the first feature being directly or diagonally above the second feature, or only indicates that the horizontal height of the first feature is higher than that of the second feature. The first feature being "below", "under" and "on the underside of" the second feature encompasses the first feature being directly or diagonally below the second feature, or only indicates that the horizontal height of the first feature is lower than that of the second feature.

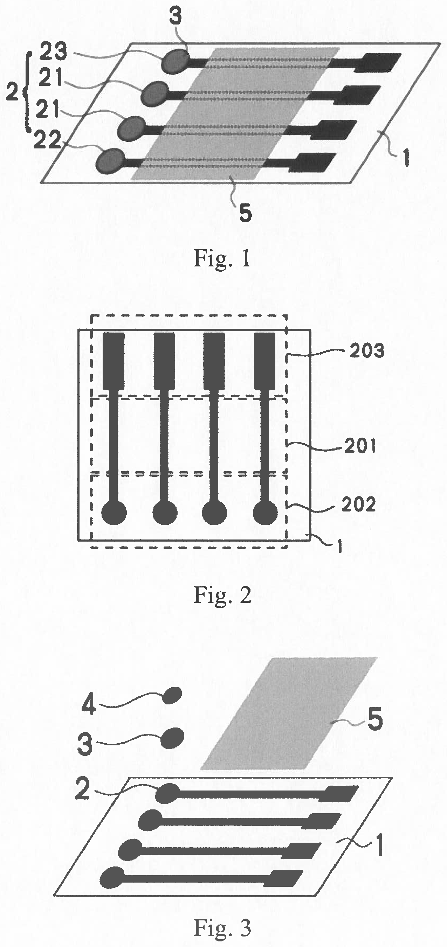

Referring to Fig. 1, the electrochemical sensor provided by the present application includes a sensor body 1, sensing electrodes 2 and an ion permselective membrane 3. The sensing electrodes 2 are arranged on the surface of the sensor body 1. Here, the sensing electrodes 2 include a testing electrode 21, a reference electrode 22 and a hydrogen ion indication electrode 23. The testing electrode 21 is configured to test the concentration of metal ions in a solution; the reference electrode 22 is configured to provide a reference for the testing electrode 21; and the hydrogen ion indication electrode 23 is configured to measure the pH value of the solution. The ion permselective membrane 3 covers the surface of at least one of the testing electrode 21 and the hydrogen ion indication electrode 23.

The sensor body 1 is placed in a solution; the ion permselective membrane 3 on the sensor body 1 filters corresponding target hydrogen or metal ions in the solution, to achieve selective potential responses to the ions, such that the hydrogen or metal ions are accumulated on the surface of the hydrogen ion indication electrode 23 or the testing electrode 21 among the sensing electrodes 2 to create a potential difference relative to the reference electrode 22, thereby determining the concentration of the hydrogen or metal ions. The reference electrode 22 serves as a potential reference point, and the hydrogen ion indication electrode 23 measures the pH value of the solution and calibrate the concentration of the tested ions based on the pH value, to reduce the interference easily caused by the degree of acidity or alkalinity of the solution to the measurement. The testing electrode 21 tests the concentration of metal ions; and when two or more types of metal ions exist in the solution, a corresponding number of testing electrodes 21 is arranged, respectively, and the concentration of the tested ions is calibrated based on the concentration of interference ions among the metal ions and the potential difference as measured by the plurality of testing electrodes, to reduce the interference caused by the interference ions to the tested ions, thereby enhancing the testing accuracy and stability. Here, the metal ions may include divalent metal cations such as calcium, magnesium and zinc ions.

In some embodiments, a sliver chloride reference electrode may be selected as the reference electrode 22, and the testing electrodes 21 may include divalent metal cation (such as calcium or magnesium ions) electrodes.

Referring to Fig. 2, as an optional implementation, the testing electrode 21, the reference electrode 22 and the hydrogen ion indication electrode 23 each include a transmission line section 201, an electrode section 202 and a contact section 203. The transmission line section 201 is arranged on the surface of the sensor body 1. The electrode section 202 is arranged on an end of the transmission line section 201 and configured for acquiring data. The contact section 203 is arranged on the other end of the transmission line section 201 and configured for connecting a measuring device.

The electrode section 202 acquires the test data of corresponding individual ions in the solution; the contact section 203 is connected to the measuring device; and the transmission line section 201 transmits the data acquired by the electrode section 202 to the measuring device connected to the contact section 203 for data processing and analysis.

Referring to Fig. 3, as an optional implementation, the ion permselective membrane 3 includes a membrane skeleton, an ion carrier, a surfactant and a plasticizer. Here, the ion carrier accounts for 0.5% to 8% of the mass fraction range of the ion permselective membrane 3; the surfactant accounts for 0 to 4% of the mass fraction range of the ion permselective membrane 3; and the plasticizer accounts for 1% to 10% of the mass fraction range of the ion permselective membrane 3.

As an optional implementation, the ion permselective membrane 3 covering the hydrogen ion indication electrode 23 further includes a metal chelator having a mass fraction range of 0.1% to 5% of the ion permselective membrane 3. The metal chelator includes at least one of ethylenediaminetetraacetic acid, diethylenetriaminepentaacetic acid and 1,10-phenanthroline.

Referring to Fig. 3, as an optional implementation, the electrochemical sensor further includes a gel protecting membrane 4, which is arranged on the surface of the sensing electrodes 2. The gel protecting membrane 4 protects the surface of the sensing electrode 2.

Referring to Fig. 3, as an optional implementation, the electrochemical sensor further includes an insulation layer 5. The insulation layer 5 is arranged on the surface of the transmission line sections 201 and configured for reducing an external electrical interference on the transmission line section 201.

As an optional implementation, the sensing electrodes 2 are screen-printed electrodes. The screen-printed electrodes may include conductive materials, such as carbon paste, silver paste, gold paste, platinum paste and so on .

It should be noted that the sensing electrodes 2 are not limited to the screen-printed electrodes, and any electrode form, such as carbon rods or gold foils, capable of reacting with the tested ions to generate electric signals and adapting to the electrochemical ion sensors may also be selected.

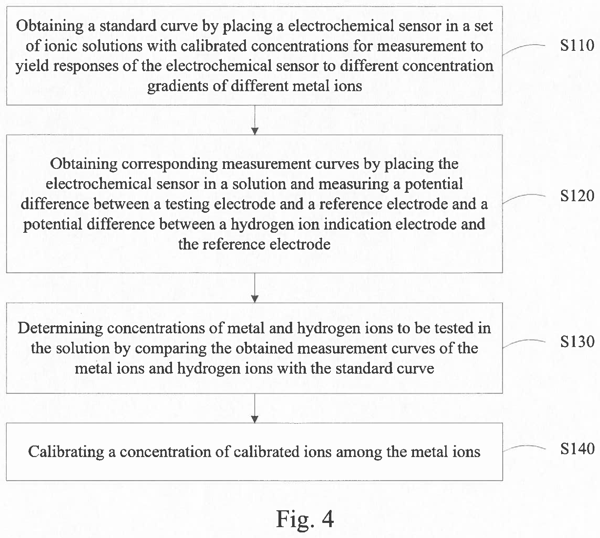

Referring to Fig. 4, the present application further provides a method for testing metal ions by using the electrochemical sensor described above, which includes steps S120 to S140.

In step S120, the electrochemical sensor is placed in a solution. The electrochemical sensor is provided with the reference electrode 22, the hydrogen ion indication electrode 23 and the testing electrodes 21 corresponding to different metal ions present in the solution respectively. After the electrochemical sensor is placed, the potential difference between the testing electrode 21 and the reference electrode 22 and the potential difference between the hydrogen ion indication electrode 23 and the reference electrode 22 are measured, to obtain the measurement curves corresponding to the individual metal ions and hydrogen ions existing in the solution.

In step S130, the obtained measurement curves of the metal ions and hydrogen ions are compared with a standard curve, the individual measured signal values measured by the electrochemical sensor are aligned with numerical values on the standard curve, and proportional substitution conversion is performed to obtain a corresponding ion concentration, thereby determining the concentrations of metal and hydrogen ions to be tested in the solution.

In step S140, the concentration of calibrated ions among the metal ions is calibrated.

In this way, the multi-channel sensing electrodes 2 are constructed, the cross-interference effects between the individual sensing electrodes 2 are used as the basis for data calibration, and real-time regression calibration is performed on the measured values by means of a calibration algorithm, such that the testing accuracy for divalent cations or metal ions such as calcium, magnesium and zinc ions in the solution is effectively enhanced, enabling component identification within a mixed system with a variety of ions.

As an optional implementation, the method for testing metal ions by using the electrochemical sensor described above further includes step S110.

In step S110, the electrochemical sensor is placed in a set of ionic solutions with calibrated concentrations for measurement, to yield responses of the electrochemical sensor to different concentration gradients of different metal ions, thereby obtaining the standard curve.

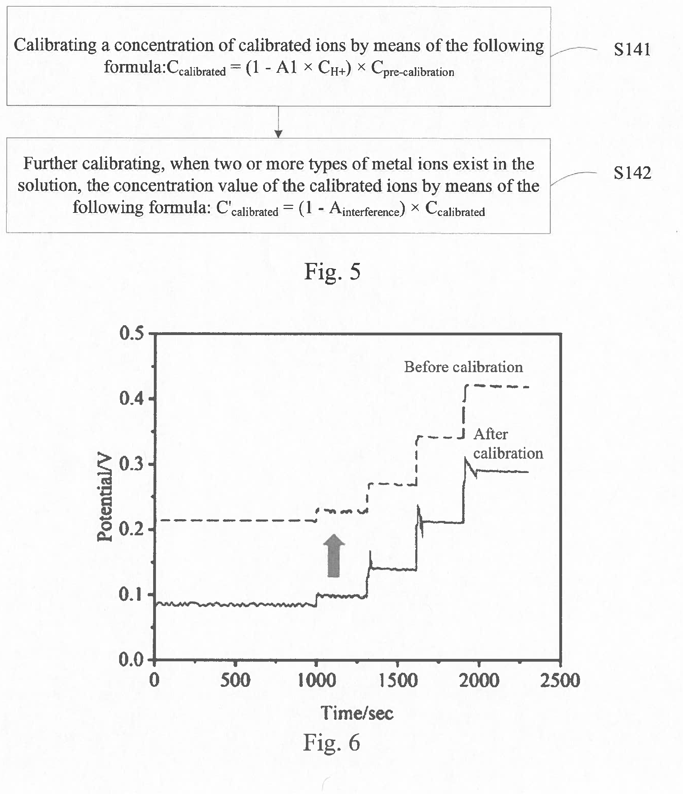

Referring to Fig. 5, as an optional implementation, calibrating the concentration of the calibrated ions among the metal ions includes substep S141.

In substep S141, the concentration value of the calibrated ions is calibrated based on the determined concentration of the metal ions in the solution and an influence coefficient of the concentration of the hydrogen ions on the calibrated ions, by means of the following formula:

$$C_{calibrated} = (1 - A1 \times C_{H+}) \times C_{pre\text{-}calibration},$$

wherein $C_{calibrated}$ indicates a concentration value of the calibrated ions after calibration, $C_{H+}$ indicates the concentration of the hydrogen ions, A1 indicates an influence coefficient of the concentration $C_{H+}$ of the hydrogen ions on an electrode-measured value of the calibrated ions, and $C_{pre\text{-}calibration}$ indicates a concentration value of the calibrated ions before calibration.

Referring to Fig. 5, as an optional implementation, calibrating the concentration of the calibrated ions among the metal ions further includes substep S142.

In substep S142, when two or more types of metal ions exist in the solution, the calibrated ions among the metal ions are further calibrated. wherein during the further calibrating, the concentration value of the calibrated ions is further calibrated based on an influence coefficient of interference ions among the metal ions on an electrode-measured value of the calibrated ions by means of the following calculation formula:

$$C'_{calibrated} = (1 - A_{interference}) \times C_{calibrated},$$

wherein $C'_{calibrated}$ indicates a concentration value of the calibrated ions after the further calibrating, and $A_{interference}$ indicates the influence coefficient of the interference ions on the electrode-measured value of the calibrated ions.

According to some embodiments, for example, as shown in Fig. 1, an electrochemical sensor of a four-channel design is provided. Here, the reference electrode 22 is a silver chloride reference electrode, and the testing electrodes 21 include a calcium ion electrode and a magnesium ion electrode. The calcium and magnesium ion electrodes of the testing electrodes 21 and the hydrogen ion indication electrode 23 are each covered with the ion permselective membrane 3. The ion permselective membrane 3 covering the calcium ion electrode is a calcium ion permselective membrane containing 1.5% of ion carrier by mass. The ion permselective membrane 3 covering the magnesium ion electrode is a magnesium ion permselective membrane containing 2% of ion carrier by mass. The hydrogen ion indication electrode 23 is a pH hydrogen ion electrode. The ion permselective membrane 3 covering the hydrogen ion indication electrode 23 is a hydrogen ion permselective membrane containing 1% of ion carrier by mass fraction and 0.3% of the metal chelator of ethylenediaminetetraacetic acid by mass fraction.

The electrochemical sensor is used to measure the concentration of magnesium ions in a solution. During the measurement process, the potential difference $V_{41}$ between the hydrogen ion indication electrode 23 and the silver chloride reference electrode is first measured, and the measurement curve corresponding to this potential difference is compared with the standard curve to determine the concentration $C_{H+}$ of the hydrogen ions. In case of the aforementioned formulation ratio of the hydrogen ion permselective membrane, the influence coefficient $A1_{Ca}$ of the concentration $C_{H+}$ of the hydrogen ions on the electrode-measured value of the calcium ions is 0.024, and the influence coefficient $A1_{Mg}$ of the concentration $C_{H+}$ of the hydrogen ions on the electrode-measured value of the magnesium ions is 0.031.

The potential difference $V_{21}$ between the calcium ion electrode and the silver chloride reference electrode is measured, the concentration $C_{Ca}$ of the calcium ions is determined by comparing this potential difference with the standard curve, and based on the influence coefficient $A1_{Ca}$ of the concentration $C_{H+}$ of the hydrogen ions on the electrode-measured value of the calcium ions, the calibrated concentration value of the calcium ions is calculated as $C^{H}_{Ca} = (1 - A1_{Ca} \times C_{H+}) \times C_{Ca}$.

Here, $C^{H}_{Ca}$ indicates the concentration value of the calcium ions after calibration, and $C_{Ca}$ indicates the concentration value of the calcium ions before calibration.

Again, the potential difference $V_{31}$ between the magnesium ion electrode and the silver chloride reference electrode is measured, the concentration $C_{Mg}$ of the magnesium ions is determined by comparing this potential difference with the corresponding measurement curve and standard curve, and based on the influence coefficient $A1_{Mg}$ of the concentration $C_{H+}$ of the hydrogen ions on the electrode-measured value of the magnesium ions, the calibrated concentration value of the magnesium ions is calculated as $C^{H}_{Mg} = (1 - A1_{Mg} \times C_{H+}) \times C_{Mg}$.

Here, $C^{H}_{Mg}$ indicates the concentration value of the magnesium ions after calibration, and $C_{Mg}$ indicates the concentration value of the magnesium ions before calibration.

Since the calcium ions in the solution may also cause interference to the electrode-measured value of the magnesium ions, further calculation is performed according to the calibration coefficient A2 of the calcium ions to obtain the secondary calibrated concentration value of the magnesium ions as $C^{H-Ca}_{Mg} = (1 - A2) * C^{H}_{Mg}$.

Here, $C^{H-Ca}_{Mg}$ indicates the secondary calibrated concentration value of the magnesium ions.

Magnesium chloride at different concentrations was added to six 10 mL beakers containing aqueous solutions to prepare magnesium ion solutions at concentrations of 0.25 mM, 0.5 mM, 1 mM, 2 mM, 4 mM, and 8mM. Measurements were respectively performed using the sensor, and the measured values were calibrated using the aforementioned calibration parameters; and at the same time, the concentrations of the magnesium ions in the six aqueous samples were calibrated by the flame atomic absorption spectroscopy. The comparison of the measured and calibrated values before and after calibration by the sensor is shown in Table 1.

Table 1

| Test sample No. | Flame spectroscopy-calibrated magnesium concentration (mM) | Test value of sensor-uncalibrated magnesium concentration (mM) | Pre-calibration deviation | Sensor-calibrated magnesium concentration (mM) | Post-calibration deviation |
|---|---|---|---|---|---|
| 1 | 0.242 | 0.208 | -14% | 0.232 | -4% |
| 2 | 0.499 | 0.403 | -19% | 0.474 | -5% |
| 3 | 1.006 | 0.789 | -22% | 0.983 | -2% |
| 4 | 2.013 | 1.723 | -14% | 1.938 | -4% |
| 5 | 3.984 | 3.317 | -17% | 3.868 | -3% |
| 6 | 8.023 | 6.233 | -22% | 7.709 | -4% |

As can be seen by referring to Table 1, the actual flame spectroscopic measurement show that the deviation rate between the measured and actual values of the magnesium ion in the six groups of test samples range from -22% to -14%, while the deviation rate between the calibrated and actual values of the magnesium ion ranges from -5% to -2%. Thus, it can be seen that the deviation rate is significantly reduced.

According to some embodiments, for example, a further electrochemical sensor of a four-channel design is used in this embodiment. Here, the reference electrode 22 is a sliver chloride reference electrode, and the testing electrodes 21 include a calcium ion electrode and a magnesium ion electrode. The calcium and magnesium ion electrodes of the testing electrodes 21 and the hydrogen ion indication electrode 23 are each covered with the ion permselective membrane 3. The calcium ion electrode is covered with a calcium ion permselective membrane containing 1.8% of the ion carrier by mass fraction; the magnesium ion electrode is covered with a magnesium ion permselective membrane containing 1.8% of the ion carrier by mass fraction; and the pH hydrogen ion electrode is covered with a hydrogen ion permselective membrane containing 1% of the ion carrier by mass fraction and 0.6% of the metal chelator of diethylenetriaminepentaacetic acid by mass fraction.

The electrode is used to measure the concentration of magnesium ions in the solution. During the measurement process, the potential difference $V_{41}$ between the pH hydrogen ion indication electrode and the silver chloride reference electrode is first measured, and the measurement curve corresponding to this potential difference is compared with the standard curve to determine the concentration $C_{H+}$ of the hydrogen ions. In case of the aforementioned formulation ratio of the hydrogen ion permselective membrane in this embodiment, the influence coefficient $A1_{Ca}$ of the concentration $C_{H+}$ of the hydrogen ions on the electrode-measured value of the calcium ions is 0.043, and the influence coefficient $A1_{Mg}$ of the concentration $C_{H+}$ of the hydrogen ions on the electrode-measured value of the magnesium ions is 0.067. Likewise, the potential differences between the calcium ion electrode and the sliver chloride reference electrode and between the magnesium ion electrode and the sliver chloride reference electrode are measured, and the calibrated concentration value of the magnesium ions is calculated using $A1_{Ca}$ and $A1_{Mg}$ by means of the formula for calibrating the concentration value of the calibrated ions.

Magnesium chloride at different concentrations was added to six 10 mL beakers containing aqueous solutions to prepare the aqueous samples of magnesium ion solutions at concentrations of 0.25 mM, 0.5 mM, 1 mM, 2 mM, 4 mM, and 8mM. Measurements were respectively performed using the electrochemical sensor of the present application, and the measured values were calibrated using the aforementioned calibration parameters for concentration values; and at the same time, the concentrations of the magnesium ions in the six aqueous samples were calibrated by the flame atomic absorption spectroscopy. The comparison of the measured and calibrated values before and after calibration by the electrochemical sensor is shown in Table 2.

Table 2

| Test sample No. | Flame spectroscopy-calibrated magnesium concentration (mM) | Test value of sensor-uncalibrated magnesium concentration (mM) | Pre-calibration deviation | Sensor-calibrated magnesium concentration (mM) | Post-calibration deviation |
|---|---|---|---|---|---|
| 1 | 0.246 | 0.298 | 21% | 0.255 | 4% |
| 2 | 0.489 | 0.576 | 18% | 0.503 | 3% |
| 3 | 1.013 | 1.246 | 23% | 1.053 | 4% |
| 4 | 2.008 | 2.463 | 22% | 2.068 | 3% |
| 5 | 3.981 | 4.936 | 24% | 4.181 | 5% |
| 6 | 8.028 | 9.592 | 19% | 8.189 | 2% |

As can be seen by referring to Table 2, the actual flame spectroscopic measurement show that the deviation rate between the measured and actual values of the magnesium ion in the six groups of test samples range from 19% to 24%, while the deviation rate between the calibrated and actual values of the magnesium ion ranges from 2% to 5%. Thus, it can be seen that the deviation rate is significantly reduced.

In some embodiments, the aqueous solution may be mineral water or tap water.

As shown in Fig. 6, it provides the effect contrast diagram of the measurement curves of magnesium ions before and after calibration. As can be seen from Fig. 6, by testing the magnesium ions using the electrochemical sensor of the present application, the calibrated value after calibration by the electrochemical sensor effectively compensates for the interferences caused by the hydrogen and calcium ions on the measurement.

The above provides a detailed description of the embodiments of the present application. Specific examples have been used herein to set forth the principle and implementation of the present application. The description of the above embodiments is intended only to aid in understanding the method and core concept of the present application. Also, any variation or modification made by those skilled in the art based on the idea of the present application according to the specific implementation and application scope of the present application shall fall within the scope of protection of the present application. In summary, the content of the present specification should not be construed as limiting the scope of the present application.

**Claims**

1. An electrochemical sensor, comprising:

   a sensor body;
   sensing electrodes, being arranged on a surface of the sensor body and comprising:

   a testing electrode for testing a concentration of metal ions in a solution,
   a reference electrode for providing a reference for the testing electrode, and
   a hydrogen ion indication electrode for measuring a pH value of the solution; and

   an ion permselective membrane, covering a surface of at least one of the testing electrode and the hydrogen ion indication electrode.

2. The electrochemical sensor according to claim 1, wherein the testing electrode, the reference electrode and the hydrogen ion indication electrode each comprise:

   a transmission line section arranged on the surface of the sensor body;
   an electrode section arranged on an end of the transmission line section and configured for acquiring data; and
   a contact section arranged on another end of the transmission line section and configured for connecting a measuring device.

3. The electrochemical sensor according to claim 1, wherein the ion permselective membrane comprises:

   a membrane skeleton;
   an ion carrier having a mass fraction range of 0.5% to 8% of the ion permselective membrane;
   a surfactant having a mass fraction range of 0 to 4% of the ion permselective membrane; and
   a plasticizer having a mass fraction range of 1% to 10% of the ion permselective membrane.

4. The electrochemical sensor according to any one of claims 1 to 3, wherein the ion permselective membrane covering the hydrogen ion indication electrode further comprises:
   a metal chelator having a mass fraction range of 0.1% to 5% of the ion permselective membrane and comprising at least one of ethylenediaminetetraacetic acid, diethylenetriaminepentaacetic acid and 1,10-phenanthroline.

5. The electrochemical sensor according to any one of claims 1 to 3, further comprising:
   a gel protecting membrane arranged on surfaces of the sensing electrodes.

6. The electrochemical sensor according to claim 2, further comprising:
   an insulation layer arranged on a surface of the transmission line section and configured for reducing an external electrical interference on the transmission line section.

7. The electrochemical sensor according to any one of claims 1 to 3, wherein the sensing electrodes are screen-printed electrodes.

8. The electrochemical sensor according to any one of claims 1 to 3, wherein
   the reference electrode serves as a potential reference point, the pH value of the solution is measured via the hydrogen ion indication electrode, and a concentration of tested ions among the metal ions is calibrated, to reduce an interference of a degree of acidity or alkalinity of the solution to measurement.

9. The electrochemical sensor according to any one of claims 1 to 3, wherein

the testing electrode is configured to test the concentration of the metal ions; and when at least two types of the metal ions exist in the solution, a corresponding number of the testing electrodes are arranged, respectively, and the concentration of the tested ions is calibrated based on concentrations and potential differences of interference ions and the tested ions among the metal ions as measured by the at least two types of the testing electrodes, to reduce an interference caused by the interference ions to the tested ions.

10. The electrochemical sensor according to any one of claims 1 to 3, wherein
the sensor is an electrochemical sensor of a four-channel design, the reference electrode is a silver chloride reference electrode, the testing electrode comprises a calcium ion electrode and a magnesium ion electrode, and both of the calcium ion electrode and the magnesium ion electrode are covered with the ion permselective membrane.

11. A method for testing metal ions by using the electrochemical sensor according to any one of claims 1 to 10, comprising:

obtaining measurement curves corresponding to metal ions and hydrogen ions existing in a solution by placing the electrochemical sensor in the solution and measuring a potential difference between the testing electrode and the reference electrode and a potential difference between the hydrogen ion indication electrode and the reference electrode;
determining concentrations of metal and hydrogen ions to be tested in the solution by aligning individual measured signal values measured by the electrochemical sensor with numerical values on a standard curve and performing proportional substitution conversion to obtain a corresponding ion concentration to compare the obtained measurement curves of the metal ions and hydrogen ions with the standard curve; and
calibrating a concentration of calibrated ions among the metal ions.

12. The method according to claim 11, further comprising:
obtaining the standard curve by placing the electrochemical sensor in a set of ionic solutions with calibrated concentrations for measurement to yield responses of the electrochemical sensor to different concentration gradients of different metal ions.

13. The method according to claim 11, wherein calibrating the concentration of the calibrated ions among the metal ions comprises:

calibrating, based on the determined concentration of the metal ions in the solution and an influence coefficient of the concentration of the hydrogen ions on the calibrated ions, a concentration value of the calibrated ions by means of the following formula:

$$C_{calibrated} = (1 - A1 \times C_{H+}) \times C_{pre\text{-}calibration},$$

wherein $C_{calibrated}$ indicates a concentration value of the calibrated ions after calibration, $C_{H+}$ indicates the concentration of the hydrogen ions, A1 indicates an influence coefficient of the concentration $C_{H+}$ of the hydrogen ions on an electrode-measured value of the calibrated ions, and $C_{pre\text{-}calibration}$ indicates a concentration value of the calibrated ions before calibration.

14. The method according to claim 13, wherein calibrating the concentration of the calibrated ions among the metal ions further comprises:

further calibrating, when two or more types of metal ions exist in the solution, the calibrated ions among the metal ions;
wherein during the further calibrating, the concentration value of the calibrated ions is further calibrated based on an influence coefficient of interference ions among the metal ions on an electrode-measured value of the calibrated ions by means of the following calculation formula:

$$C'_{calibrated} = (1 - A_{interference}) \times C_{calibrated}$$

wherein $C'_{calibrated}$ indicates a concentration value of the calibrated ions after the further calibrating, and $A_{interference}$ indicates the influence coefficient of the interference ions on the electrode-measured value of the calibrated ions.

Fig. 1

Fig. 2

Fig. 3

Obtaining a standard curve by placing a electrochemical sensor in a set of ionic solutions with calibrated concentrations for measurement to yield responses of the electrochemical sensor to different concentration gradients of different metal ions ⌐ S110

Obtaining corresponding measurement curves by placing the electrochemical sensor in a solution and measuring a potential difference between a testing electrode and a reference electrode and a potential difference between a hydrogen ion indication electrode and the reference electrode ⌐ S120

Determining concentrations of metal and hydrogen ions to be tested in the solution by comparing the obtained measurement curves of the metal ions and hydrogen ions with the standard curve ⌐ S130

Calibrating a concentration of calibrated ions among the metal ions ⌐ S140

Fig. 4

Calibrating a concentration of calibrated ions by means of the following formula: $C_{calibrated} = (1 - A1 \times C_{H+}) \times C_{pre-calibration}$ — S141

Further calibrating, when two or more types of metal ions exist in the solution, the concentration value of the calibrated ions by means of the following formula: $C'_{calibrated} = (1 - A_{interference}) \times C_{calibrated}$ — S142

Fig. 5

Fig. 6

**TRANSLATION**

<p style="text-align:center">**INTERNATIONAL SEARCH REPORT**</p>

| International application No. |
| --- |
| **PCT/CN2025/106652** |

**A. CLASSIFICATION OF SUBJECT MATTER**

G01N 27/30(2006.01)i; G01N 27/333(2006.01)i; G01N 27/416(2006.01)i

According to International Patent Classification (IPC) or to both national classification and IPC

**B. FIELDS SEARCHED**

Minimum documentation searched (classification system followed by classification symbols)

IPC: G01N

Documentation searched other than minimum documentation to the extent that such documents are included in the fields searched

Electronic data base consulted during the international search (name of data base and, where practicable, search terms used)

CNTXT, ENTXTC, DWPI, WPABS, ISI Web of Science, Elsevier Science Direct: H离子, 补偿, 钙, 钙离子, 干扰, 碱度, 金属离子, 镁, 镁离子, 氢离子, 酸度, 深圳安吉尔, 赵凯, 雷晶, 陈大竞, 汪程成, 刘梦琦, 酸度, 酸碱度, 酸碱性, 误差, 系数, 校正, 校准, 因子, 影响, Ca, Mg, pH, Mg2+, H+, Ca2+, electrochemical sensor, electrode, ion specific, ion sensitive, correct+, calibrat+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 119044267 A (SHENZHEN ANGEL DRINKING WATER INDUSTRIAL GROUP CORP.) 29 November 2024 (2024-11-29)<br>specific embodiments | 1-14 |
| Y | CN 116183696 A (GUANGZHOU MECART SENSOR TECHNOLOGY CO., LTD.) 30 May 2023 (2023-05-30)<br>description, paragraphs 11, 19, 28, 35-36, 46, 61-63, 66, and 72, and figures 1-5 | 1-14 |
| Y | CN 114354704 A (DALIAN MARITIME UNIVERSITY) 15 April 2022 (2022-04-15)<br>specific embodiments, and figures 1-4 | 1-14 |
| A | CN 113514524 A (EAST CHINA NORMAL UNIVERSITY) 19 October 2021 (2021-10-19)<br>specific embodiments | 1-14 |
| A | CN 114487063 A (NANJING UNIVERSITY) 13 May 2022 (2022-05-13)<br>specific embodiments | 1-14 |
| A | KR 20060084264 A (DAE YOON SCALE INDUSTRIAL CO., LTD.) 24 July 2006 (2006-07-24)<br>specific embodiments | 1-14 |

☐ Further documents are listed in the continuation of Box C. ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **13 October 2025** | **17 October 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2025/106652**

| Patent document cited in search report | | | Publication date (day/month/year) | Patent family member(s) | | | Publication date (day/month/year) |
|---|---|---|---|---|---|---|---|
| CN | 119044267 | A | 29 November 2024 | None | | | |
| CN | 116183696 | A | 30 May 2023 | None | | | |
| CN | 114354704 | A | 15 April 2022 | None | | | |
| CN | 113514524 | A | 19 October 2021 | None | | | |
| CN | 114487063 | A | 13 May 2022 | None | | | |
| KR | 20060084264 | A | 24 July 2006 | KR | 100759926 | B1 | 18 September 2007 |

Form PCT/ISA/210 (patent family annex) (July 2022)